# EUROPÄISCHE PATENTANMELDUNG

(11) **EP 4 059 584 A2**
(43) Veröffentlichungstag der Anmeldung: **21.09.2022**
(21) Anmeldenummer: 22155726.7
(22) Anmeldetag: 08.02.2022
(51) Int. Cl.: A63F 13/98, A63F 13/25, A63F 13/69, A63F 13/213, A63F 13/245, A63H 3/52, G06F 1/16, G09F 27/00, G02F 1/13357

(54) **PORTALEINHEIT FÜR SPIELZEUG, SYSTEM SOWIE VERFAHREN ZUR VERWENDUNG EINER PORTALEINHEIT**

(30) Priorität: 19.03.2021 DE 102021106803
(71) Anmelder: Geobra Brandstätter Stiftung & Co. KG, 90513 Zirndorf (DE)
(72) Erfinder: Müller, Frank, 81241 München (DE)
(74) Vertreter: Patentanwälte Olbricht Buchhold Keulertz

(57) **Zusammenfassung**

Beschrieben wird eine Portaleinheit für Spielzeug, wobei die Portaleinheit ein Gehäuse aufweist, wobei an dem Gehäuse eine Anzeigevorrichtung angeordnet ist, wobei die Anzeigevorrichtung ein Flüssigkristalldisplay und eine Hintergrundbeleuchtung aufweist, wobei das Flüssigkristalldisplay transparent ist, wobei die Anzeigevorrichtung einen Innenraum bildet, von dem wenigstens eine Innenwand von außen sichtbar ist, wobei die Hintergrundbeleuchtung von dem Flüssigkristalldisplay beabstandet an einer Rückwand des Innenraums angeordnet ist, wobei die Portaleinheit eine Aufnahme für wenigstens ein Spielzeug sowie eine Spielzeugerkennungseinrichtung aufweist.

## Beschreibung

Die Erfindung betrifft eine Portaleinheit für Spielzeug, ein System sowie ein Verfahren zur Verwendung einer Portaleinheit.

Portaleinheiten für Spielzeug, Systeme und Verfahren zur Verwendung von Portaleinheiten sind zum Teil im Stand der Technik bekannt.

Anwendungen der virtuellen Realität finden mit immer weiter steigender Rechenleistung, den erweiterten Möglichkeiten dank des Einsatzes künstlicher Intelligenz sowie günstigerer Hardware immer mehr Nutzer im professionellen sowie im privaten Bereich, einschließlich des Bereichs der Freizeitgestaltung. So ist es beispielsweise bekannt, mittels eines Mobiltelefons oder eines tragbaren, oft tastaturlosen Bildschirmcomputers (Tablet) mittels einer integrierten Kamera Bilder einer Umgebung aufzunehmen, darin Oberflächen, Konturen und teilweise Objekte zu erkennen und unter Zuhilfenahme dieser Informationen virtuelle Bilder zu berechnen, die auf einem Bildschirm der entsprechenden Geräte positionsrichtig angezeigt werden. So ist es zum Beispiel möglich, reale Kamerabilder mit virtuellen Inhalten zu ergänzen. Dies kann sowohl zu Anwendungs- als auch zu Spielzwecken erfolgen. Die entsprechenden Systeme setzen jedoch gewisse Vorkenntnisse und Geschick im Umgang mit dem verwendeten technischen Gerät voraus. Dieses Geschick ist vor allem bei Kindern meist nicht gegeben.

Aus der KR 20160027384A ist eine Ausstellungsvorrichtung für Schaufenster von Geschäften bekannt, die ein transparentes Display und eine Hintergrundbeleuchtung aufweist, wobei Display und Hintergrundbeleuchtung voneinander beabstandet angeordnet sind. Das transparente Display ist dabei zwischen einem Betrachter und der Hintergrundbeleuchtung angeordnet.

Es stellt sich daher die Aufgabe, neue Spielmöglichkeiten unter Verwendung von Konzepten der virtuellen Realität für eine unerfahrene Nutzergruppe anzugeben, wobei die Spielmöglichkeiten einfach zu verwenden sein sollen und der betreffenden Zielgruppe somit interaktive Möglichkeiten zum Kennenlernen der virtuellen Realität und zum Spielen in derselben zu ermöglichen.

Die Aufgabe wird gelöst durch eine Portaleinheit für Spielzeug gemäß Anspruch 1, ein System aus wenigstens einer Portaleinheit und wenigstens einem Spielzeug gemäß dem nebengeordneten Anspruch 10 sowie einem Verfahren zur Verwendung einer Portaleinheit gemäß dem nebengeordneten Anspruch 11. Weiterführende Ausgestaltungen sind Gegenstand der jeweiligen abhängigen Ansprüche.

Beschrieben wird eine Portaleinheit für Spielzeug, wobei die Portaleinheit ein Gehäuse aufweist, wobei an dem Gehäuse eine Anzeigevorrichtung angeordnet ist, wobei die Anzeigevorrichtung ein Flüssigkristalldisplay und eine Hintergrundbeleuchtung aufweist, wobei das Flüssigkristalldisplay transparent ist, wobei die Anzeigevorrichtung einen Innenraum bildet, von dem wenigstens eine Innenwand von außen sichtbar ist, wobei die Hintergrundbeleuchtung von dem Flüssigkristalldisplay beabstandet an einer Rückwand des Innenraums angeordnet ist, wobei die Portaleinheit eine Aufnahme für wenigstens ein Spielzeug sowie eine Spielzeugerkennungseinrichtung aufweist.

Das Gehäuse kann im allgemeinen quaderförmig ausgestaltet sein und sechs Gehäuseseiten aufweisen. Das Gehäuse kann gemäß einer Variante überwiegend aus Kunststoff bestehen, der unter anderem spritzgegossen sein kann. Das Gehäuse kann zerlegbar sein, stoß- und spritzwassergeschützt und in verschiedenen Farben eingefärbt. An dem Gehäuse kann ein Stromanschluss vorgesehen sein. In dem Gehäuse kann ein Akkumulator oder ein Batteriefach angeordnet sein.

Die Anzeigevorrichtung kann an einer der Gehäuseseiten des Gehäuses angeordnet sein und diese teilweise, größtenteils oder vollständig überdecken. Die Anzeigevorrichtung kann in das Gehäuse vertieft eingebaut sein, sodass eine nach außen weisende Vorderseite der Anzeigevorrichtung flächenbündig mit der entsprechenden Gehäuseseite der Portaleinheit oder gegenüber dieser zurückversetzt ist.

Dadurch, dass die Anzeigevorrichtung einen Innenraum bildet, bei dem die Hintergrundbeleuchtung von dem Flüssigkristalldisplay beabstandet an einer Rückwand des Innenraums angeordnet ist, kann bei einer von dem Flüssigkristalldisplay erzeugten Darstellung ein Eindruck der Tiefe erreicht werden, der hologrammartig wirkt und damit eine erhöhte Plastizität und ein gesteigertes Realitätsempfinden schafft.

Insbesondere, wenn die anzuzeigende Darstellung so positioniert ist, dass sie in Relation zu einer Innenwand positioniert scheinen, kann ein holographischer Effekt verstärkt werden. Wenn beispielsweise eine Spielfigur auf einem Boden des Innenraums angeordnet ist, wird der Eindruck erweckt, die Spielfigur steht im Innenraum. Der holographische Effekt kann grafisch dadurch verstärkt werden, dass die Anzeigevorrichtung Schattenwürfe simuliert.

Die Schattenwürfe können auf dem Boden und, je nach simulierter Beleuchtungssituation und Größe des dargestellten Objekts, teilweise auf der Rückwand bzw. der Hintergrundbeleuchtung dargestellt werden. Wenn ein Benutzer der Portaleinheit die Anzeigevorrichtung aus einem passenden Winkel von leicht oberhalb der Darstellung betrachtet, kann dadurch ein starker dreidimensionaler Effekt erzielt werden.

Dadurch, dass die Portaleinheit eine Aufnahme für wenigstens ein Spielzeug sowie eine Spielzeugerkennenseinrichtung aufweist, ist es möglich, dass Spielzeug der Verwender der Portaleinheit zu erkennen. Dann kann eine virtuelle Wiedergabe des Spielzeugs, nachfolgend als "virtuelles Spielzeug" bezeichnet, auf der Anzeigevorrichtung dargestellt werden. Das virtuelle Spielzeug kann unter anderem in Videos eingebunden sein, es kann bewegt oder modifiziert werden und dergleichen mehr.

Für den Verwender, insbesondere für Kinder, entsteht dadurch der Eindruck, als würde das in die Aufnahme gestellte Spielzeug in die virtuelle Realität portiert, was vielfältige Spielmöglichkeiten eröffnet.

In einer ersten weiterführenden Ausgestaltung kann vorgesehen sein, dass die Anzeigevorrichtung wenigstens einen schaltbaren Polarisationsfilter aufweist.

Die Verwendung wenigstens eines schaltbaren Polarisationsfilters erlaubt es, den Kontrast der Anzeigevorrichtung durch Abdunkeln der Hintergrundbeleuchtung in gewissen Bereichen zu erhöhen. Hierdurch lassen sich vielfältigere Szenen darstellen und der Anwendungsbereich der Portaleinheit vergrößern.

In einer weiteren weiterführenden Ausgestaltung kann vorgesehen sein, dass die Portaleinheit eine Recheneinheit zur Steuerung der Anzeigevorrichtung und/oder der Spielzeugerkennungseinrichtung aufweist.

Die Recheneinheit kann einen Prozessor sowie einen nichtflüchtigen Speicher aufweisen. In dem nichtflüchtigen Speicher kann ein Betriebssystem nebst notwendiger Anzeigesoftware, z.B. zur Interpretation und Wiedergabe von Bild- und Videodaten, zum Betrieb der Portaleinrichtung gespeichert sein. Des Weiteren kann in dem nichtflüchtigen Speicher eine Datenbank mit verschiedenen Spielzeugen und deren graphischer Darstellungen gespeichert sein. Darüber hinaus können Daten zur Verwendungsmöglichkeit der Spielzeuge gespeichert sein. Die Verwendung einer solchen Recheneinheit ermöglicht die Berechnung virtueller Darstellungen, eine Manipulation sowie die Wiedergabe von Videos auf der Basis des oder der erkannten Spielzeuge.

In einer weiteren weiterführenden Ausgestaltung kann vorgesehen sein, dass die Spielzeugerkennungseinrichtung wenigstens eines von einem NFC-Scanner, einer Kamera, einem optischen Scanner und/oder einer Nahfeldkommunikationsvorrichtung aufweist.

NFC (Near Field Communication) ist eine bekannte Abkürzung für Nahfeldkommunikationssysteme. NFC ist ein auf RFID-Technik (Radio-Frequency Identification) basierender internationaler Übertragungsstandard zum kontaktlosen Austausch von Daten per elektromagnetischer Induktion mittels loser gekoppelter Spulen über kurze Strecken. Diese Strecken betragen üblicherweise wenige Zentimeter. Die Verwendung eines NFC-Scanners ermöglicht die zuverlässige Erkennung von Spielzeug, dass mit einem NFC-Tag (NFC-Aufkleber) ausgerüstet ist. NFC hat den Vorteil, dass die Technologie nur einseitig bestromt sein muss, die NFC-Tags erfordern somit keinen Energiespeicher. Außerdem sind NFC-Tags kostengünstig und können unauffällig angeordnet werden.

Auch Funkkommunikationsmöglichkeiten kommen in Betracht, z.B. Bluetooth, insbesondere niedrigenergieverbrauchende Standards.

Kameras sowie sonstige optische Scanner erlauben optische Erkennungsverfahren ohne zwangsläufige Notwendigkeit von speziellen Aufklebern, können jedoch unter Umständen schlechte Erkennungsgenauigkeit haben, insbesondere bei modifiziertem Spielzeug. Bei optischen Verfahren ist es möglich, die Erkennungsgenauigkeit durch Verwendung von optischen Codes zu erhöhen. Solche Codes können in einer Variante QR-Codes sein, in einer anderen Variante unauffällige optische Merkmale wie Muster oder einer Struktur.

In einer weiteren weiterführenden Ausgestaltung kann vorgesehen sein, dass ein Abstand zwischen zueinander ausgerichteten Flächen zwischen Hintergrundbeleuchtung und Flüssigkristalldisplay zwischen 1/10 und 3/4 oder 1/4 und 1/2 oder 1/3 einer Höhe des Flüssigkristalldisplays beträgt.

Bei einem solchen Abstand ist es möglich, einen ausreichend großen dreidimensionalen bzw. holographischen Effekt zu erzielen.

In einer weiteren weiterführenden Ausgestaltung kann vorgesehen sein, dass die Portaleinheit eine Schnittstelle zu einem Computer aufweist, über die Daten bidirektional zwischen Computer und Portaleinheit übertragbar sind.

Eine solche Schnittstelle kann drahtlos und/oder drahtgebunden ausgeführt sein. So können in verschiedenen Varianten Schnittstellen- bzw. Kommunikationsstandards wie USB oder WLAN, Bluetooth und dergleichen zur Kommunikation und zum Datenaustausch verwendet werden. Die Portaleinheit kann sich gemäß einer Variante als solche zu erkennen geben. Entsprechende Treiber können in dem nichtflüchtigen Speicher gespeichert und zumindest bei der ersten Kopplung zwischen Computer und Portaleinheit übermittelt werden.

Durch eine solche Schnittstelle zu einem Computer ist es möglich, den Computer in das Spiel, eine Spielgestaltung oder eine Spielvorbereitung einzubinden, wozu in einer Variante über den Computer Daten an die Portaleinheit transferiert werden. Umgekehrt können Daten über das erkannte Spielzeug an den Computer übermittelt werden. Mit dem Computer können somit Szenen geplant und beeinflusst werden, Videos vorbereitet und dergleichen mehr. Die entsprechenden vorbereiteten Daten können dann in dem nichtflüchtigen Speicher der Portaleinheit gespeichert und auf der Anzeigevorrichtung der Portaleinheit dargestellt werden. Dies erhöht die Vielfalt der Spielmöglichkeiten der Portaleinheit und hält die Spielmotivation über lange Zeit aufrecht.

In einer weiterführenden Ausgestaltung kann vorgesehen sein, dass die Aufnahme eine Tür oder eine Klappe für das Spielzeug aufweist, wobei die Spielzeugerkennungseinrichtung derart positioniert ist, dass in der Aufnahme platziertes Spielzeug erkennbar ist.

Eine solche Tür oder Klappe kann geschlossen werden, sodass das Spielzeug hinter der Tür oder Klappe unsichtbar wird.

In einer weiteren weiterführenden Ausgestaltung kann vorgesehen sein, dass die Aufnahme einen Lift für das Spielzeug aufweist, wobei der Lift an der Spielzeugerkennungseinrichtung derart vorbeigeführt ist, sodass die Spielzeugerkennungseinrichtung auf dem Lift platziertes Spielzeug erkennen kann.

Ein solcher Lift kann gemäß einer Variante an einer oder mehreren Schienen in einem Liftschacht geführt sein. Der Lift kann in verschiedenen Ausführungsformen elektrisch angetrieben, federbelastet oder ausschließlich mechanisch betätigbar ausgeführt sein, was einerseits Kosten und Komplexität, anderseits aber den Betätigungskomfort beeinflusst.

Ein entsprechender Lift ermöglicht das Versenken des Spielzeugs im Inneren des Gehäuses der Portaleinheit.

Durch die beiden zuvor beschriebenen Ausgestaltungen wird der Eindruck des Portierens des eingebrachten Spielzeugs auf die Anzeigevorrichtung verstärkt, was zu positiven überraschenden Effekten und Emotionen bei den Spielenden führen kann.

Die Spielzeugerkennungseinrichtung kann in einer Variante an einer beweglichen Plattform des Lifts angeordnet sein, in einer anderen Variante am Gehäuse in der Nähe einer Bewegungsbahn des Lifts.

Durch die Anordnung der Spielzeugerkennungseinrichtung derart, dass im Lift positioniertes Spielzeug erkannt werden kann, kann die Spielzeugerkennung im Wesentlichen für den Spielenden unbemerkt stattfinden.

In einer anderen weiterführenden Ausgestaltung kann vorgesehen sein, dass die Spielzeugerkennungseinrichtung dazu eingerichtet ist, mehr als ein Spielzeug zu erkennen.

So können sowohl mehr als ein Spielzeug als auch wenigstens ein Spielzeug und wenigstens ein Zubehör im gleichen Zuge erkannt und anschließend auf der Anzeigevorrichtung angezeigt werden.

In Verbindung mit einem Lift kann der Lift in einer Ausgestaltung wenigstens zwei oder mehrere Plattformen aufweisen, die an der Spielzeugerkennungseinrichtung vorbeigeführt werden.

In einer weiteren weiterführenden Ausgestaltung kann vorgesehen sein, dass die Aufnahme auf einer anderen Seite als die Anzeigevorrichtung angeordnet ist.

Hierdurch lässt sich die Portaleinheit kompakt aufbauen und sich der Platz für die Anzeigevorrichtung maximieren. Zudem wird der Effekt des Portierens verstärkt, da die Spielfigur von der virtuellen Spielfigur weiter beabstandet erscheint.

In einer weiteren weiterführenden Ausgestaltung kann vorgesehen sein, dass die Anzeigevorrichtung eine berührungsempfindliche Oberfläche aufweist.

Eine berührungsempfindliche Oberfläche ermöglicht es, mit der Portaleinheit direkt zu interagieren, beispielsweise das Spielzeug auf der Anzeigevorrichtung zu bewegen oder zu verändern. Hierzu können in verschiedenen Ausführungsformen die Auswahl anderer Szenen, das Verändern der Beleuchtung, das Hinzufügen gewissen Zubehörs aus einer Auswahl oder das Entfernen derselben, das Einnehmen gewisser Posen oder Positionen des Spielzeugs oder dergleichen mehr ermöglicht werden. Diese Möglichkeiten können einerseits vom jeweiligen Spielzeug, andererseits von verschiedenen anderen Anreizsystemen abhängig gemacht werden.

In einer weiterführenden Ausgestaltung kann vorgesehen sein, dass nebeneinander angeordnete Portaleinheiten miteinander insbesondere drahtlos miteinander verbindbar sind. Eine derartige Verbindung kann beispielsweise als Bluetooth-Verbindung oder Bluetooth Low Energy Verbindung ausgebildet sein. Dadurch ist eine Interaktion der Spielfiguren von zwei oder mehreren nebeneinander angeordeten Portaleinheiten möglich. Beispielsweise können diese sich per Handschlag begrüßen, miteinander kämpfen oder ähnliches.

Ein erster unabhängiger Gegenstand betrifft ein System aus wenigstens einer Portaleinheit der zuvor beschriebenen Art und wenigstens einem Spielzeug.

Ein solches Spielzeug kann je nach Ausführungsform eine Spielfigur sein oder ein Zubehör zu einer Spielfigur sein. Spielfiguren können in verschiedenen Ausgestaltungen Menschen oder Tiere sein. Zubehör kann je nach Ausführungsform Bekleidung oder Accessoires wie Taschen, Gegenstände wie Werkzeuge oder sonstige Gegenstände des alltäglichen Bedarfs, Lebensmittel und dergleichen mehr sein. Zubehör kann auch Haustiere der Spielfiguren, austauschbare Haare und Ähnliches umfassen.

Ein weiterer unabhängiger Gegenstand betrifft ein Verfahren zur Verwendung einer Portaleinheit der zuvor beschriebenen Art, wobei mittels der Spielzeugerkennungseinrichtung ein Spielzeug erkannt wird, wobei aus der Recheneinheit wenigstens ein dem erkannten Spielzeug zugeordneter Datensatz geladen und mittels der Anzeigevorrichtung eine Wiedergabe eines dem erkannten Spielzeug entsprechenden virtuellen Spielzeugs angezeigt wird.

Auf diese Weise kann eine virtuelle Wiedergabe des Spielzeugs auf der Anzeigevorrichtung dargestellt werden, wobei der Verwender der Portaleinheit mit dem virtuellen Spielzeug interagieren kann.

In einer ersten weiterführenden Ausgestaltung kann vorgesehen sein, dass eine virtuelle Lichtquelle emuliert wird, wobei auf der Anzeigeeinrichtung ein Schatten des virtuellen Spielzeugs abhängig von der relativen Position der virtuellen Lichtquelle zu dem Spielzeug angezeigt wird.

Durch Verwendung einer virtuellen Lichtquelle kann der holographische Effekt der Anzeigeeinrichtung verstärkt werden.

In einer weiteren weiterführenden Ausgestaltung kann vorgesehen sein, dass ein das erkannte Spielzeug identifizierender Datensatz an den Computer gesandt wird, wobei auf dem Computer wenigstens ein Spielszenario ausgewählt, erstellt und/oder bearbeitet wird, wobei das Spielszenario zurück an die Portaleinheit übertragen und auf der Anzeigevorrichtung angezeigt wird.

Unter Verwendung eines Computers, der eine eigene Anzeigevorrichtung (Display) aufweisen kann, ist es möglich, die Möglichkeiten der Portaleinheit zu erweitern.

In einer möglichen Variante kann der Computer ein Heimcomputer oder ein Tablet oder ein Smartphone sein, der mit einem entsprechenden Programm ausgerüstet ist. Eine Verbindung kann dann direkt zwischen Portaleinheit und Computer hergestellt werden.

In einer alternativen möglichen Variante kann der Computer ein Zentralrechner sein und eine Verbindung mit der Portaleinheit kann über Fernkommunikationsprotokolle hergestellt werden. Updates zu neuen Figuren oder Spielszenen können dann beispielsweise über das Internet in den Speicher der Portaleinheit geladen werden.

Sollte ein in die Portaleinheit eingestelltes Spielzeug in der Portaleinheit nicht bekannt sein, ist es möglich, Informationen über das Spielzeug mittels der Spielzeugerkennungseinrichtung zu ermitteln und diese an den Computer zu übermitteln. Dieser kann dann dem Spielzeug zugeordnete Daten bereitstellen oder von einem Zentralrechner abrufen und an die Portaleinheit übermitteln.

In einer weiteren weiterführenden Ausgestaltung kann vorgesehen sein, dass mittels der Spielzeugerkennungseinrichtung wenigstens ein weiteres Spielzeug erkannt und angezeigt wird.

Durch Erkennung wenigstens eines weiteren anderen Spielzeuge ist es möglich, komplexere Szenen auf der Anzeigevorrichtung der Portaleinheit anzuzeigen. So ist es in manchen Ausführungsformen möglich, eine Spielfigur und ein passendes Zubehör nacheinander in die Portaleinheit zu geben, erkennen zu lassen und die Spielzeuge kombiniert zu verwenden, beispielsweise eine Spielfigur und ein Werkzeug, eine Spielfigur und ein Kleidungsstück oder eine Spielfigur und ein Haustier.

In einer weiteren weiterführenden Ausgestaltung kann vorgesehen sein, dass das virtuelle Spielzeug derart angezeigt wird, dass es auf der wenigstens einen sichtbaren Innenwand positioniert ist.

Durch Positionierung auf der wenigstens einen sichtbaren Innenwand kann der Eindruck erweckt werden, dass das sich das virtuelle Spielzeug nicht auf der Anzeigeoberfläche befindet, sondern auf der sichtbaren Innenwand. Dies verstärkt den Eindruck der Raumtiefe.

Ein weiterer unabhängiger Gegenstand betrifft ein Computerprogrammprodukt, mit einem dauerhaften computerlesbaren Speichermedium, auf dem Befehle eingebettet sind, die, wenn sie von wenigstens einer Recheneinheit ausgeführt werden, bewirken, dass die wenigstens Recheneinheit dazu eingerichtet ist, das Verfahren der vorgenannten Art auszuführen.

Das Verfahren kann auf einer oder auf mehreren Recheneinheiten verteilt ausgeführt werden, sodass bestimmte Verfahrensschritte auf der einen Recheneinheit und andere Verfahrensschritte auf wenigstens einer weiteren Recheneinheit ausgeführt werden, wobei berechnete Daten sofern notwendig zwischen den Recheneinheiten übermittelt werden können.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Seitenansicht einer Portaleinheit;
- Fig. 2: eine schematische Frontalansicht auf die Portaleinheit nach Fig. 1;
- Fig. 3: eine Darstellung eines Computers, der mit der Portaleinheit aus Fig. 1 verbindbar ist, sowie
- Fig. 4: verschiedene Phasen einer Sequenz zum Portieren einer Spielfigur in die Portaleinheit. Fig. 1 zeigt eine Portaleinheit 2.

Die Portaleinheit 2 weist ein Gehäuse 4 auf, das im Wesentlichen quaderförmige gestaltet ist. An einer Vorderseite 4.1 ist eine Anzeigevorrichtung 6 angeordnet.

Die Anzeigevorrichtung 6 weist ein transparentes Flüssigkristalldisplay 8 auf, das eine berührungsempfindliche Oberfläche 10 aufweist. Die berührungsempfindliche Oberfläche 10 kann beispielsweise kapazitativ ausgebildet sein.

Hinter dem Flüssigkristalldisplay 8 ist ein Polarisationsfilter 12 angeordnet. Das Polarisationsfilter ist schaltbar und kann somit den Transmissionsgrad der Hintergrundbeleuchtung ändern, sodass die Anzeigevorrichtung 6 heller oder dunkler erscheinen kann.

In einem Abstand d, der vorliegend 1/3 einer Höhe h des Flüssigkristalldisplays 8 beträgt, zurückversetzt befindet sich eine Hintergrundbeleuchtung 14. Die Hintergrundbeleuchtung 14 beleuchtet das Flüssigkristalldisplay 8 rückseitig. Von der Hintergrundbeleuchtung 14 ausgesandtes Licht kann durch das Flüssigkristalldisplay 8 nach außen dringen. Die Hintergrundbeleuchtung 14 verwendet als Leuchtmittel vorliegend eine Matrix aus LEDs.

Die Anzeigevorrichtung 6 weist des Weiteren einen Innenraum 16 mit einer Rückwand 18 auf, wobei die Hintergrundbeleuchtung 12 an der Rückwand 16 angeordnet ist.

Der Innenraum 14 weist zudem einen von außen sichtbaren Boden 18 auf. Der Boden 18 kann, wie nachfolgend beschrieben, in die Darstellung und in das Spielgeschehen eingebunden werden.

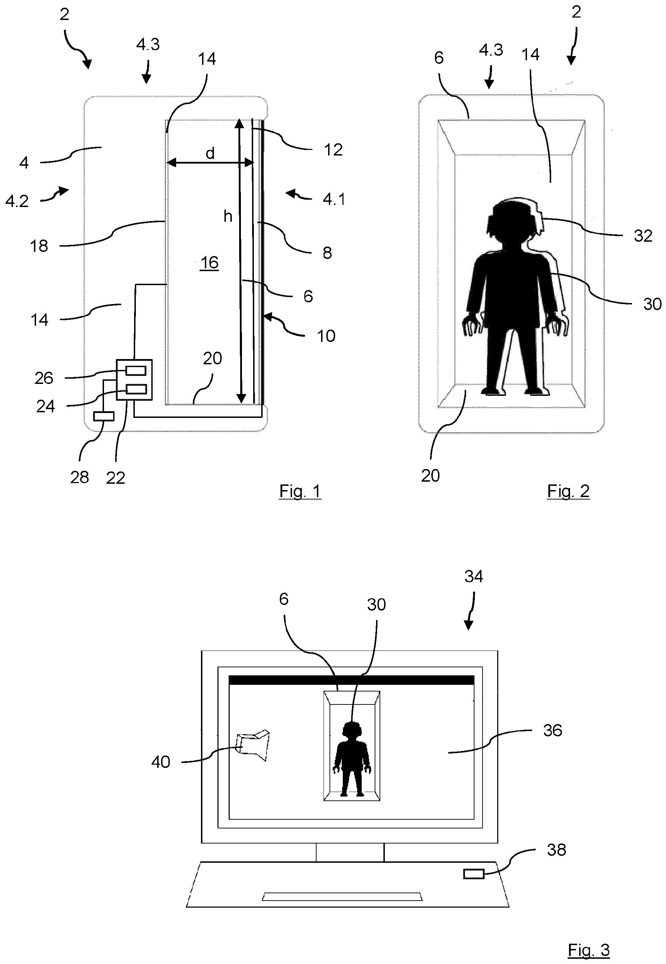

Die Portaleinheit 2 weist des Weiteren eine Recheneinheit 22 mit einem Prozessor 24 und einen nichtflüchtigen Speicher 26 auf. In dem nichtflüchtigen Speicher 26 sind unter anderem ein Betriebssystem, Ansteuerungsprogramme für die Anzeigevorrichtung 6, eine in Fig. 1 nicht dargestellte Spielzeugerkennungseinrichtung sowie Codecs zum Lesen und Interpretieren von Bild- und Videodaten zur Wiedergabe solcher graphischen Informationen auf der Anzeigevorrichtung 6 gespeichert. Des Weiteren ist eine Datenbank mit kompatiblen Spielzeugen und Zubehör dazu sowie deren graphische Repräsentation, Freiheitsgrade, Manipulationsmöglichkeiten und dergleichen gespeichert

Des Weiteren ist eine Schnittstelle 28 zu einer in Fig. 1 nicht dargestellten Computer vorgesehen. Die Schnittstelle 28 ist vorliegend drahtlos ausgeführt, kann in alternativen Ausgestaltungen aber auch drahtgebunden ausgeführt sein. Auch verschiedene Schnittstellen sind möglich, in einer Ausgestaltung zum Beispiel USB und WLAN.

Fig. 2 zeigt die Portaleinheit 2 von der Vorderseite 4.1 aus betrachtet.

Auf der Anzeigevorrichtung 6 wird eine Spielfigur 30 dargestellt, die so positioniert ist, dass sie auf dem Boden 20 zu stehen scheint. Die Anzeigevorrichtung 6 generiert des Weiteren einen Schatten 32, der einen Tiefeneffekt verstärkt.

Dadurch, dass die Anzeigevorrichtung im Wesentlichen außer der Spielfigur 30 und dem Schatten 32 nichts darstellt und dadurch, dass die Hintergrundbeleuchtung 14 in Verbindung mit der Positionierung der Spielfigur 30 auf der Anzeigevorrichtung und des Schattens 32 verwendet wird, wird der Eindruck erweckt, als sei die Spielfigur 30 ein Hologramm, das sich im Inneren des Innenraums 16 befindet.

Fig. 3 zeigt einen Computer 34.

Der Computer 34 weist einen Bildschirm 36 auf. Über eine dem Computer 34 eigene Schnittstelle 38 kann eine Verbindung mit der Schnittstelle 28 der Portaleinheit 2 hergestellt werden und es können in beide Richtungen zwischen Portaleinheit 2 und Computer 34 Daten übermittelt werden.

Auf dem Bildschirm 38 des Computers 34 wird eine Wiedergabe des Innenraums 16 der Portaleinheit 2 nebst Spielfigur 30 angezeigt. Zudem wird eine virtuelle Lichtquelle 40 dargestellt. Der Verwender des Computers 34 kann dann beispielsweise die Position der virtuellen Lichtquelle 40 verändern, wodurch die Anzeigevorrichtung 6 veranlasst wird, den Schattenwurf der virtuellen Spielfigur 30 entsprechend anzupassen. Des Weiteren kann beispielsweise die Lichtfarbe angepasst werden und es können weitere Manipulationen an der virtuellen Spielfigur 30 vorgenommen werden, wie etwa dynamische Effekte und dergleichen. Auch können Videos etc. konzipiert und geschnitten werden.

Die Synchronisation zwischen Computer 34 und Portaleinheit 2 kann simultan oder zeitversetzt erfolgen, sodass die Portaleinheit 2 auch unabhängig vom Computer 34 unter Verwendung der vom Computer 34 übertragenen Daten benutzt werden kann.

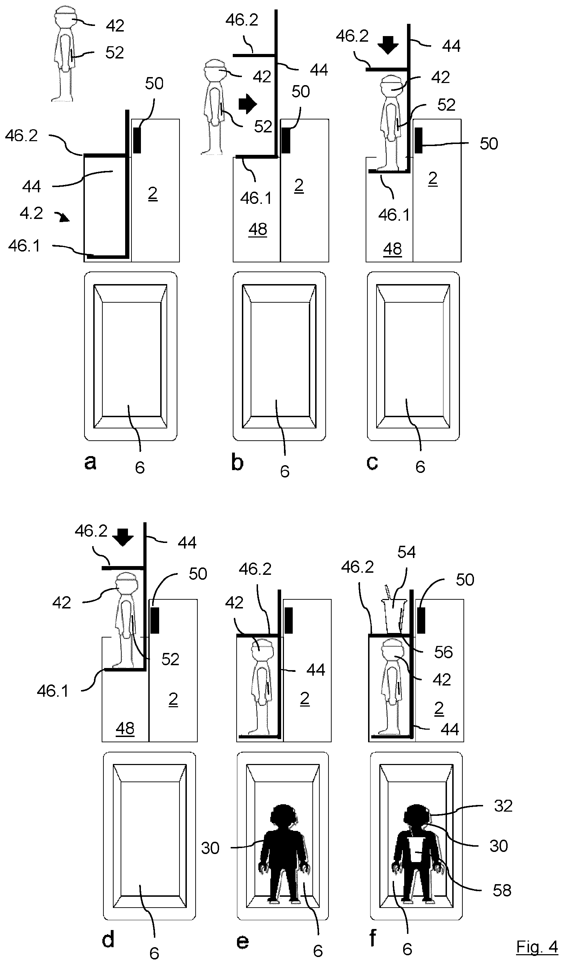

Fig. 4 zeigt eine Sequenz der Verwendung der Portaleinheit 2 in Verbindung mit einer realen Spielfigur 42.

Figur 4 zeigt dabei einen typischen Ablauf eines Verfahrens zur Verwendung der Portaleinheit 2. Dabei ist jeweils in der oberen Reihe eine geschnittene Seitenansicht der Portaleinheit 2 sichtbar, in der unteren Reihe jeweils eine Ansicht auf die Portaleinheit 2 von der Vorderseite 4.1.

Schritt a) zeigt die Portaleinheit in einem Ausgangszustand. Auf einer zu einer Rückseite 4.2 angeordneten Seite ist als Aufnahme für die Spielfigur 42 ein Lift 44 mit zwei übereinander angeordneten Plattformen 46.1, 46.2 angeordnet. Der Lift 44 ist linear in vertikaler Richtung an Schienen (nicht dargestellt) geführt und kann zu einer Oberseite 4.3 des Gehäuses 4 der Portaleinheit 2 hinausgeschoben werden.

Rückseitig zum Lift 44, im vorliegenden Ausführungsbeispiel an einer Schachtwand eines Liftschachtes 48 des Lifts 44, ist ein NFC-Scanner 50 angeordnet. Der NFC-Scanner 50 ist dazu ausgebildet, einen an der Spielfigur 42 unsichtbar angebrachten NFC-Tag 52 der Spielfigur 42 auszulesen. Auf der Anzeigevorrichtung 6 wird in dem entsprechenden Verfahrensschritt a) nichts angezeigt.

In Verfahrensschritt b) ist der Lift 44 vollständig nach oben ausgefahren, sodass die untere Plattform 46.1 zugänglich ist und bestückt werden. Die Spielfigur 42 kann nun auf die untere Plattform 46.1 gestellt werden.

Der NFC-Tag 52 enthält Informationen über die Art der Spielfigur 42. Es kann vorgesehen sein, dass jede Spielfigur über einen eigenen, Identifikator verfügt, der in manchen Ausführungsvarianten einzigartig, in anderen Ausführungsvarianten typabhängig sein kann. So können verschiedene Spielfiguren des gleichen Typs jeweils den gleiche NFC-Tag verwenden und sind somit untereinander austauschbar. Die Verwendung einzigartiger Identifikatoren ermöglicht weitere Funktionen.

In Verfahrensschritt d) wird der Lift 44 nach unten bewegt, sodass die Spielfigur 42 in dem Liftschacht 48 versenkt wird. Dabei wird der NFC-Tag 52 direkt am NFC-Scanner 50 vorbeigeführt. Der NFC Scanner 50 kann dann den NFC-Tag 52 auslesen und diese Informationen an die Recheneinheit 22 weitergeben.

Die Recheneinheit 22 kann diese Daten im Anschluss auswerten. Während die Spielfigur 42 weiter in den Lichtschacht 48 hineingeschoben wird, kann die Recheneinheit 22 passende Daten aus dem nicht flüchtigen Speicher 26 laden und mittels des Prozessors 24 verarbeiten, um eine Anzeige der virtuellen Spielfigur 30 vorzubereiten.

Ist, wie in Verfahrensschritt e) dargestellt, die Spielfigur 42 vollständig eingeschobenen und befindet sich der Lift 44 wieder in seiner Ausgangsstellung, wird die Anzeigevorrichtung 6 aktiviert und die virtuelle Spielfigur 30 auf der Anzeigevorrichtung 6 angezeigt. Zur Erkennung eines vollständig eingeschobenen Lifts 44 kann beispielsweise eine (nicht dargestellte) Schalteranordnung verwendet werden.

Über die berührungsempfindliche Oberfläche 10 der Anzeigevorrichtung 6 ist der Benutzer der Portaleinheit 2 nun in der Lage, mit der virtuellen Spielfiguren 30 zu interagieren.

Verfahrensschritt f) ist optional. Der Benutzer der Portaleinheit 2 kann auf der oberen Plattform 46.2 unter anderem ein Zubehör, hier einen Getränkebecher 54 positionieren, der ebenfalls mit einem NFC-Tag 56 ausgestattet ist. Dadurch, dass die obere Plattform 46.2 in der Nähe des NFC-Scanners 50 angeordnet ist, ist der NFC-Tag 56 im Sende- und Empfangsbereich des NFC-Scanners 50.

Sobald über den NFC-Scanner 50 erkannt wurde, dass ein Zubehör, hier der Getränkebecher 54, auf der oberen Plattform 46.2 steht, wird diese Information an die Recheneinheit 22 gesendet und von dieser verarbeitet. Auf der Anzeigevorrichtung 6 erscheint dementsprechend ein virtueller Getränkebecher 58. Der Benutzer der Portaleinheit 2 kann den virtuellen Getränkebecher 58 dann verwenden und in das Spielgeschehen mit einbeziehen.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 2: Portaleinheit
- 4: Gehäuse
- 4.1: Vorderseite
- 4.2: Rückseite
- 4.3: Oberseite
- 6: Anzeigevorrichtung
- 8: Flüssigkristalldisplay
- 10: berührungsempfindliche Oberfläche
- 12: Polarisationsfilter
- 14: Hintergrundbeleuchtung
- 16: Innenraum
- 18: Rückwand
- 20: Boden
- 22: Recheneinheit
- 24: Prozessor
- 26: nichtflüchtiger Speicher
- 28: Schnittstelle
- 30: virtuelle Spielfigur
- 32: Schatten
- 34: Computer
- 36: Bildschirm
- 38: Schnittstelle
- 40: virtuelle Lichtquelle
- 42: Spielfigur
- 44: Lift
- 46.1, 46.2: Plattform
- 48: Liftschacht
- 50: NFC-Scanner
- 52: NFC-Tag
- 54: Getränkebecher
- 56: NFC-Tag
- 58: virtueller Getränkebecher
- d: Abstand
- h: Höhe

## Patentansprüche

1. Portaleinheit für Spielzeug (42, 54), wobei die Portaleinheit (2) ein Gehäuse (4) aufweist, wobei an dem Gehäuse (4) eine Anzeigevorrichtung (6) angeordnet ist, wobei die Anzeigevorrichtung (6) ein Flüssigkristalldisplay (8) und eine Hintergrundbeleuchtung (14) aufweist, wobei das Flüssigkristalldisplay (8) transparent ist, wobei die Anzeigevorrichtung (6) einen Innenraum (16) bildet, von dem wenigstens eine Innenwand (20) von außen sichtbar ist, wobei die Hintergrundbeleuchtung (14) von dem Flüssigkristalldisplay (8) beabstandet an einer Rückwand (18) des Innenraums (16) angeordnet ist, wobei die Portaleinheit (2) eine Aufnahme (44, 46.1, 46.2, 48) für wenigstens ein Spielzeug (42, 54) sowie eine Spielzeugerkennungseinrichtung (50) aufweist.

2. Portaleinheit nach Anspruch 1, wobei die Anzeigevorrichtung (6) wenigstens einen schaltbaren Polarisationsfilter (12) aufweist.

3. Portaleinheit nach Anspruch 1 oder 2, wobei die Portaleinheit (2) eine Recheneinheit (22) zur Steuerung der Anzeigevorrichtung (6) und/oder der Spielzeugerkennungseinrichtung (50) aufweist.

4. Portaleinheit nach einem der vorangegangenen Ansprüche, wobei die Spielzeugerkennungseinrichtung wenigstens eines von einem NFC-Scanner (50), einer Kamera, einem optischen Scanner und/oder einer Nahfeldkommunikationsvorrichtung aufweist.

5. Portaleinheit nach einem der vorangegangenen Ansprüche, wobei ein Abstand (d) zwischen zueinander ausgerichteten Flächen zwischen Hintergrundbeleuchtung (14) und Flüssigkristalldisplay (8) 1/10 und 3/4 oder 1/4 und 1/2 oder 1/3 einer Höhe (h) des Flüssigkristalldisplays (8) beträgt.

6. Portaleinheit nach einem der vorangegangenen Ansprüche, wobei die Portaleinheit (2) eine Schnittstelle (28) zu einem Computer (34) aufweist, über die Daten bidirektional zwischen Computer (34) und Portaleinheit (2) übertragbar sind.

7. Portaleinheit nach einem der vorangegangenen Ansprüche, wobei die Aufnahme eine Tür oder eine Klappe für das Spielzeug (42, 54) aufweist, wobei die Spielzeugerkennungseinrichtung derart positioniert ist, dass in der Aufnahme platziertes Spielzeug erkennbar ist und/oder wobei die Aufnahme (44, 46.1, 46.2, 48) einen Lift (44) für das Spielzeug (42, 54) aufweist, wobei der Lift (44) an der Spielzeugerkennungseinrichtung (50) derart vorbeigeführt ist, sodass die Spielzeugerkennungseinrichtung (50) auf dem Lift (44) platziertes Spielzeug (42, 54) erkennen kann.

8. Portaleinheit nach einem der vorangegangenen Ansprüche, wobei die Aufnahme (44, 46.1, 46.2, 48) auf einer anderen Seite (4.2) als die Anzeigevorrichtung (6) angeordnet ist.

9. Portaleinheit nach einem der vorangegangenen Ansprüche, wobei die Anzeigevorrichtung (6) eine berührungsempfindliche Oberfläche (10) aufweist.

10. System aus wenigstens einer Portaleinheit nach einem der vorangegangenen Ansprüche und wenigstens einem Spielzeug (42, 54).

11. Verfahren zur Verwendung einer Portaleinheit nach einem der vorgenannten Ansprüche, wobei mittels der Spielzeugerkennungseinrichtung (50) ein Spielzeug (42, 54) erkannt wird, wobei aus der Recheneinheit (22) wenigstens ein dem erkannten Spielzeug (42, 54) zugeordneter Datensatz geladen und mittels der Anzeigevorrichtung (6) eine Wiedergabe eines dem erkannten Spielzeug (42, 54) entsprechenden virtuellen Spielzeugs (42, 54) angezeigt wird.

12. Verfahren nach Anspruch 11, wobei eine virtuelle Lichtquelle (40) emuliert wird, wobei auf der Anzeigevorrichtung (6) ein Schatten (32) des virtuellen Spielzeugs (30) abhängig von der relativen Position der virtuellen Lichtquelle (40) zu dem Spielzeug (42, 54) angezeigt wird.

13. Verfahren nach Anspruch 11 oder 12, wobei ein das erkannte Spielzeug (42, 54) identifizierender Datensatz an den Computer (34) gesandt wird, wobei auf dem Computer (34) wenigstens ein Spielszenario ausgewählt, erstellt oder bearbeitet wird, wobei das Spielszenario auf der Anzeigevorrichtung (6) angezeigt wird.

14. Verfahren nach einem der Ansprüche 11 bis 13, wobei mittels der Spielzeugerkennungseinrichtung (50) wenigstens ein weiteres Spielzeug (42, 54) erkannt und angezeigt wird.

15. Verfahren nach einem der Ansprüche 11 bis 14, wobei das virtuelle Spielzeug (42, 54) derart angezeigt wird, dass es auf der wenigstens einen sichtbaren Innenwand (20) positioniert ist.
